# EUROPÄISCHE PATENTSCHRIFT

(11) **EP 3 190 679 B1**
(45) Veröffentlichungstag und Bekanntmachung des Hinweises auf die Patenterteilung: **12.09.2018**
(21) Anmeldenummer: 17150263.6
(22) Anmeldetag: 04.01.2017
(51) Int. Cl.: H02J 7/00, H01M 6/50

(54) **VERFAHREN UND VORRICHTUNG ZUR DEPASSIVIERUNG EINER BATTERIE EINES WERTBEHÄLTERS**
METHOD AND DEVICE FOR DEPASSIVATION OF A BATTERY OF A VALUABLE ITEM CONTAINER
PROCÉDÉ ET DISPOSITIF DE DÉPASSIVATION D'UNE BATTERIE D'UN COFFRE

(30) Priorität: 11.01.2016 DE 102016100341
(43) Veröffentlichungstag der Anmeldung: 12.07.2017
(73) Patentinhaber: Wincor Nixdorf International GmbH, 33106 Paderborn (DE)
(72) Erfinder: Schild, Michael, 33098 Paderborn (DE); Ringel, Sascha, 33397 Rietberg (DE)

(56) Entgegenhaltungen:
- EP-A1- 2 736 023
- US-A1- 2015 326 049

## Beschreibung

Die Erfindung betrifft ein Verfahren zur Depassivierung einer Batterie eines Wertbehälters, der mit einer Batterie und mindestens einer elektronisch steuerbaren Komponente ausgestattet ist. Die Erfindung bezieht sich auf einen transportablen Wertbehälter, der mit einer Entwertungseinheit für zu transportierende Wertgegenstände, wie Banknoten, Wertscheine und dergleichen, ausgestattet ist. Außerdem betrifft die Erfindung einen solchen Wertbehälter, der eine Steuerschaltung aufweist, die beschaffen ist, eine oder mehrere Steuerungsprozeduren für die mindestens eine elektronisch steuerbare Komponente durchzuführen, insbesondere Steuerungsprozeduren zur Aktivierung und Deaktivierung von Betriebsmodi der mindestens einen Komponente bzw. Entwertungseinheit.
Es ist allgemein bekannt, in Batterie-betriebenen Vorrichtungen, die Batterie einer sog. Depassivierung zu unterziehen. Denn aufgrund der chemischen Struktur gewisser Batterietypen, insbesondere von Lithium-Batterien, kann es bei Lagerung der Batterie zu einer Passivierung kommen. Dies bedeutet, dass sich in der gelagerten oder nichtbenutzten Batterie eine Passivierungsschicht aufbaut, welche bewirkt, dass die Klemmenspannung der Batterie bei Belastung absinkt und ihren Nominalwert erst dann erreicht, wenn die Depassivierungsschicht durch den Betrieb der Batterie abgebaut ist. Bis dahin ist die Batterie und somit das betriebene Gerät nicht voll einsatzfähig. Üblicherweise wird dann die besagte Depassivierung der Batterie durchgeführt, häufig manuell, indem an die Klemmen eine gewisse Last (Hilfslast) angelegt wird, um die Depassivierungsschicht vor Inbetriebnahme der Batterie abzubauen.

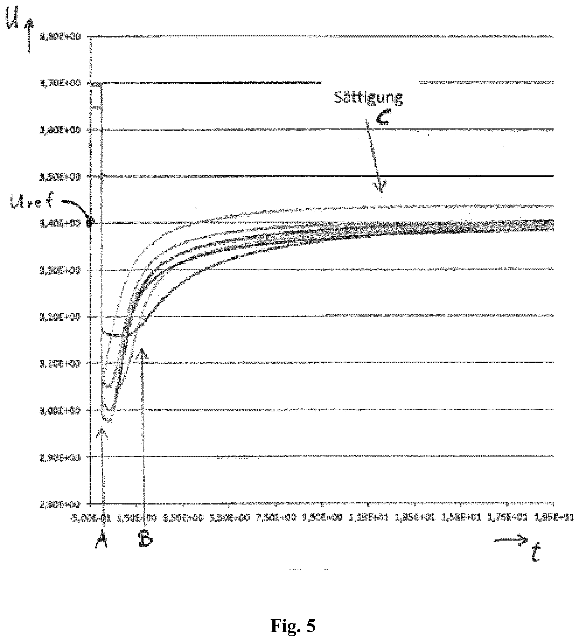

Aus der US 2015/00326049 A1 ist es bekannt, die Batterie (siehe dort in Fig. 20 "Energy Storage 30") einer automatischen Depassivierung zu unterziehen (siehe Text, Absatz [0113] "automatic depassivation"). Die Batterie versorgt mindestens eine elektrische Steuerschaltung (siehe "Controll - 55" und "Control - 56" des "Control Circuit 58" in Fig. 5), welche eine Steuerungsprozedur für elektronisch steuerbare Komponenten durchführt (siehe "frst/second Subsystem 52/53" in Fig. 5), die ebenfalls batteriebetrieben sind.

Im Bereich von Wertbehältern, insbesondere von transportablen Wertbehältern, wie z.B. Geldkassetten, ist es bekannt, diese mit batteriebetriebenen Komponenten auszustatten, welche u.a. eine ordnungsgemäße Verwendung des jeweiligen Wertbehälters sicherstellen und insbesondere Manipulations- und Diebstahlversuche verhindern oder zumindest erschweren sollen. Beispielsweise sind Geldkassetten bekannt, die mit Entwertungseinrichtungen für die transportierten Banknoten oder Wertscheine ausgestattet sind, insbesondere mit sogenannten Tinteneinfärbesystemen (Tintenkits), die im Falle einer manipulierten Verwendung der Geldkassette, die Wertscheine bzw. Banknoten mit einer markanten und nicht mehr entfernbaren Farbe einfärben und somit entwerten. Bereits durch die Tatsache, dass Geldkassetten mit derartigen Tintenkits ausgestattet sind, können Manipulationsversuche und Diebstähle effektiv vereitelt werden.

In der EP 2 736 023 A1 wird eine Geldkassette mit überwachendem Betriebsmodus offenbart. Die Geldkassette enthält einen Aufnahmebereich zur Aufnahme von Wertscheinen, eine Sensoreinheit zur Detektion von Manipulationsversuchen, ein Speicherelement zum Speichern von Daten mit Informationen über Manipulationsversuche und eine Steuerungseinheit zur Steuerung der Entwertungseinheit, um ggf. die Wertscheine irreversibel zu entwerten. In einem aktivierten Betriebsmodus der Geldkassette speichert die Steuerungseinheit bei der Detektion eines Manipulationsversuches Daten mit Informationen über den Manipulationsversuch und löst die Entwertungseinheit aus. In einem deaktivierten Betriebsmodus der Geldkassette dagegen löst die Steuerungseinheit bei einem Manipulationsversuch die Entwertungseinheit nicht aus und speichert auch keine Daten mit Informationen über diesen Manipulationsversuch. Die Steuerungseinheit, die Entwertungseinheit und ggf. weitere Komponenten werden von einer Batterie, vorzugsweise mit einer Lithium-Batterie, mit Strom versorgt.

Wie oben erläutert wurde, kann es bei Lagerung der Batterie zu einer Passivierung kommen, welche eine (manuelle oder automatische) Passivierung erforderlich machen kann. Die Vorgehensweise einer manuellen Depassivierung ist umständlich und dauert häufig einige Minuten, was für viele Anwendungen, so auch für Geldkassetten und Wertbehälter, im allgemeinen nicht hingenommen werden kann, weil diese in der Regel stets sofort einsatzbereit sein sollten.

Im Bereich von sogenannten Back-Up-Batterien, die zur Notstromversorgung von größeren an das Stromnetz angeschlossenen Einrichtungen eingesetzt werden, sind Verfahren zur Depassivierung bekannt, wie sie z.B. in der EP 0 948 828 B1 beschrieben werden.

Aufgabe der Erfindung ist es, ein Verfahren zur Depassivierung einer Batterie eines Wertbehälters zu entwickeln und vorzustellen, das die oben erläuterten Probleme überwindet und insbesondere eine manuelle, langwierige sowie aufwendige Depassivierung vermeidet. Außerdem soll ein Wertbehälter vorgestellt werden, der mindestens eine elektronisch steuerbare und batteriebetriebene Komponente sowie Steuerungsschaltung aufweist und zur Durchführung des Verfahrens beschaffen ist.

Gelöst wird die Aufgabe durch ein Verfahren mit dem Merkmalen des Anspruchs 1 sowie durch einen Wertbehälter mit den Merkmalen des nebengeordneten Anspruchs.

Demnach wird ein Verfahren vorgestellt, das zur Depassivierung einer Batterie eines Wertbehälters geeignet ist, der mindestens eine elektronisch steuerbare Komponente und eine damit verbundene Steuerschaltung aufweist, die von der Batterie versorgt werden, wobei von der Steuerschaltung mindestens eine Steuerungsprozedur für die mindestens eine elektronisch steuerbare Komponente durchgeführt wird. Als Wertbehälter wird ein transportabler Behälter für den Transport von Wertgegenständen verwendet. Von der Steuerschaltung wird auch die Depassivierung der Batterie durchgeführt, und zwar im Zusammenhang mit der Aktivierung oder Deaktivierung der mindestens einen Steuerungsprozedur oder Unterprozedur davon durchgeführt. Dabei wird die Depassivierung der Batterie vor Aktivierung oder nach Deaktivierung der Steuerungsprozedur bzw. Unterprozedur durchgeführt.

Dadurch wird eine direkte funktionale Einbindung eines Depassivierungsvorgangs in eine oder mehrere bestehende Steuerungsprozeduren und/oder Unterprozeduren realisiert, wodurch Synergieeffekte gewonnen werden, wie z.B. Ausnutzung der bestehenden Hard- und Software, Einbindung der Depassivierung in bestehende Benutzer-Schnittstellen usw.. Beispielsweise kann die Erfindung sehr vorteilhaft in die Steuerungsprozedur(en) eines Tinteneinfärbesystems eingebunden werden, wodurch ermöglicht wird, dass das Tinteneinfärbesystem selbständig den Batteriezustand überwacht und ggf. eine Depassivierung durchführt, und abhängig davon, ob die Depassivierung erfolgreich war oder nicht, in den Ausgangspunkt für eine Standardprozedur wechselt. Beispielsweise kann beim Einsatz des Wertbehälters bzw. der Geldkassette im Feld vorgesehen sein, das vor Inbetriebnahme die Batterie geprüft und ggf. einer Depassivierung unterzogen wird. Erst wenn die Depassivierung erfolgreich war und die Klemmen- bzw. Systemspannung ausreichend hoch ist, wird ein einen Anfangsstatus gewechselt vom dem ausgehend eine Standardprozedur (Routine) gestartet werden kann, wie z.B. Scharfstellen des Tinteneinfärbesystems. Ausgehend von einer werksseitigen Vorkonfektionierung vor Erstauslieferung der Geldkassette an den Kunden/Benutzer (z.B. Wertunternehmen), wird ein erster Initialisierungszustand erst dann aktiviert, wenn zuvor die Batterie geprüft und eine evtl. erforderliche Depassivierung erfolgreich durchgeführt worden ist. Es kann somit effektiv verhindert werden, dass Geldkassetten mit unzureichender Batteriequalität ausgeliefert werden. Damit wird für beide Fälle (Wieder-Inbetriebnahme; Erstauslieferung) im Rahmen einer automatisch ablaufenden Überprüfung sichergestellt, dass der batteriebetriebene Wertbehälter nur dann zur Verwendung bzw. Auslieferung für einen E2E-Prozess (End-To-End) freigegeben wird, wenn die Batterie voll einsatzbereit ist.

Diese und weitere vorteilhafte Ausgestaltungen der Erfindung ergeben sich auch aus den Unteransprüchen.
Demnach wird vorzugsweise immer vor einer ersten Durchführung der mindestens einen Steuerungsprozedur, zuvor die Depassivierung der Batterie durchgeführt. Vorzugsweise wird die Depassivierung der Batterie in Abhängigkeit von Betriebszuständen und/oder Betriebsmodi des Wertbehälters durchgeführt, die durch die mindestens eine Steuerungsprozedur aktivierbar und/oder deaktivierbar sind.
Beispielsweise kann vorgesehen werden, dass mittels der mindestens einen Steuerungsprozedur (z.B. Ansteuerung des Tintenkits) in Abhängigkeit von veränderbaren Betriebsparametern mehrere Betriebsmodi (OFF, init) der mindestens einen elektronisch steuerbaren Komponente (Tintenkit) aktiviert oder deaktiviert werden, und dass zumindest einer der Betriebsmodi nur bei einer erfolgreich durchgeführten Depassivierung der Batterie aktiviert oder deaktiviert wird. In diesem Zusammenhang wird die Batterie bevorzugter Weise vor einer jeden ersten Aktivierung oder Deaktivierung des zumindest einen der Betriebsmodi durchgeführt.
In bevorzugten Ausführungsbeispielen ist die mindestens eine elektronisch steuerbare Komponente eine Entwertungseinheit für in dem Wertbehälter transportierte Wertgegenstände, insbesondere für Banknoten und/oder Wertscheine, und es wird die Steuerungsprozedur für einen Ereignis-gesteuerten Betrieb der Entwertungseinheit durchgeführt, insbesondere für einen Betrieb bzw. Betriebsmodus, der eine Entwertung der Wertgegenstände umfasst und insbesondre bei einem an dem Wertbehälter auftretendem Manipulations-Ereignis durchgeführt wird. Beispielsweise handelt es sich dabei um eine Unterprozedur, welche eine Tintenkit scharfschaltet und im Manipulationsfall auslöst.

Das Verfahren kann vorzugsweise noch einen oder mehrere der folgenden Schritte umfassen:
Depassivierung der Batterie durch Zuschalten einer Last und Messen der absinkenden und dann wieder ansteigenden Klemmenspannung;
Prüfen, ob die Klemmspannung einen vorgebbaren Referenzwert überschreitet oder nicht;
Wenn die Klemmspannung den vorgebbaren Referenzwert überschreitet, wird die Depassivierung als erfolgreich beendet und mit der Durchführung der Steuerungsprozedur begonnen; andernfalls wird die Depassivierung weiter durchgeführt;
Prüfen, ob für den Eintritt in einen ersten Betriebszustand ein Betriebsparameter gesetzt ist oder nicht;
Wenn der Betriebsparameter gesetzt ist, wird durch Eintritt in den ersten Betriebszustand ein erster Betriebsmodus aktiviert (z.B. Anfangszustand "OFF");
Wenn der Betriebsparameter nicht gesetzt ist, wird durch Eintritt in einen zweiten Betriebszustand ein zweiter Betriebsmodus aktiviert (z.B. Anfangszustand "init");
Prüfen in dem ersten Betriebszustand, ob der Betriebsparameter noch gesetzt ist oder nicht mehr;
Wenn der Betriebsparameter noch gesetzt ist, wird der erste Betriebszustand beibehalten und der erste Betriebsmodus bleibt aktiviert; andernfalls wird in den zweiten Betriebszustand gewechselt;
Prüfen in dem zweiten Betriebszustand, ob der Betriebsparameter weiterhin nicht gesetzt ist oder nun gesetzt wird;
Wenn der Betriebsparameter weiterhin nicht gesetzt ist, wird der zweite Betriebszustand beibehalten und der zweite Betriebsmodus bleibt aktiviert; andernfalls wird in den ersten Betriebszustand gewechselt.

Es kann in dem Schritt für das Prüfen der Klemmspannung diese für eine vorgebare Zeitdauer überwacht werden, um den zeitlichen Verlauf der Klemmspannung im Vergleich mit dem Referenzwert zu erfassen, wobei abhängig davon über das Beenden oder Fortführen der Depassivierung der Batterie entschieden wird. In diesem Zusammenhang kann es vorteilhaft sein, wenn der Referenzwert in Abhängigkeit einer Umgebungstemperatur vorgegeben wird, insbesondere wenn bei Erhöhung der Umgebungstemperatur der Referenzwert erhöht wird.

Das Verfahren kann auch so ausgestaltet werden, dass die mehreren Betriebsmodi verschiedene Betriebszustände, insbesondere einen Ausgangs-Zustand für die Inbetriebnahme des Wertbehälters und einen Initialisierung-Zustand für die werksseitige Auslieferung des Wertbehälters umfassen. Auch kann vorgesehen werden, dass der Betriebsmodus des jeweils aktivierten Betriebszustandes auf einem Anzeigedisplay des Wertbehälters angezeigt wird, und dass auch ein Depassivierungsmodus angezeigt wird, wenn die Depassivierung der Batterie durchgeführt wird. Zudem wird bevorzugt die Erfindung so realisiert, dass auf einem bzw. dem Anzeigedisplay des Wertbehälters ein Anzeige-Element für die Höhe der gemessenen Klemmenspannung angezeigt wird.

Hierdurch wird sichergestellt, dass zumindest beim ersten Eintritt in einen Modus der bestehenden Steuerungsprozedur überprüft und sichergestellt wird, dass die Batterie keiner Depassivierung bedarf oder wenn doch, dass eine Depassivierung erfolgreich durchgeführt werden konnte.

Diese Ausgestaltung bezieht sich beispielsweise auf Geldkassetten mit einem Tinteneinfärbesystem als Entwertungseinheit, welche im Falle einer Manipulation bzw. eines Diebstahls ausgelöst wird. Dabei geht die Manipulationsüberwachung einher mit der Überwachung und ggf. erforderlichen Depassivierung der Batterie.

Auch kann vorzugsweise die Referenzspannung in Abhängigkeit der Umgebungstemperatur vorgegeben werden, insbesondere kann bei Erhöhung der Umgebungstemperatur die Referenzspannung erhöht werden.

In dem hier vorgeschlagenen Verfahren umfassen die mehreren Betriebsmodi verschiedene Betriebszustände, insbesondere einen AUS-Zustand ("OFF") und einen Initialisierungs-Zustand ("init"), der Entwertungseinheit, wobei die Depassivierung der Batterie zumindest immer vor dem ersten Eintritt in einen der Betriebszustände durchgeführt wird.

Der erfindungsgemäße Wertbehälter ist mit mindestens einer elektronisch steuerbaren Komponente, einer damit verbundene Steuerschaltung und einer Batterie ausgestattet, wobei die Steuerschaltung beschaffen ist, eine oder mehrere Steuerungsprozeduren für die mindestens eine elektronisch steuerbare Komponente durchzuführen. Der Wertbehälter ist ein transportabler Behälter für den Transport von Wertgegenständen und die Steuerschaltung ist beschaffen, das hier offenbarte Verfahren zur Depassivierung der Batterie durchzuführen. Vorzugsweise enthält der Wertbehälter zumindest eines der folgenden Merkmale:
die Batterie ist eine Lithium-Batterie;
die Steuerschaltung weist einen Mikro-Controller auf;
die mindestens eine elektronisch steuerbare Komponente umfasst eine Entwertungseinheit, insbesondere ein Tinteneinfärbesystem, für in dem Wertbehälter transportierte Wertgegenstände, insbesondere für Banknoten und/oder Wertscheine;
der Wertbehälter weist ein Anzeigedisplay zur Anzeige von Betriebsmodi der jeweils aktivierten Betriebszustände und/oder zur Anzeige eines Depassivierungsmodus und/oder eines Anzeige-Elementes für die Höhe der gemessenen Klemmenspannung der Batterie auf.

Die Erfindung und die sich daraus ergebenden Vorteile wird nachfolgend im Detail anhand von Ausführungsbespielen beschrieben, wobei auf die beiliegenden Zeichnungen Bezug genommen wird, die folgende schematische Darstellungen wiedergeben:
- Fig. 1: zeigt als Blockschaltbild den Aufbau eines erfindungsgemäßen Wertbehälters, der als Geldkassette ausgebildet ist;
- Fig. 2: zeigt in den Teilbildern a) - c) verschiedene Anzeigen von Betriebszuständen, die im Zusammenhang mit einer Depassivierung der Batterie der Geldkassette auftreten;
- Fig. 3: zeigt dazu in Form eines Zustands-Diagramm einer Zustands-Maschine (state machine) die ineinander überführbaren Betriebszustände Zustände
- Fig. 4: zeigt dazu in Form eines Ablaufdiagramms die Schritte des erfindungsgemäßen Verfahrens für eine in eine bestehende Steuerungsprozedur eingebundene Depassivierung der Batterie der Geldkassette;
- Fig. 5: veranschaulicht die zeitliche Überwachung der Klemmenspannung während der Depassivierung der Batterie; und
- Fig. 6: veranschaulicht eine temperaturabhängige Anpassung einer Referenzspannung für die Überwachung der Klemmenspannung während der Depassivierung der Batterie.

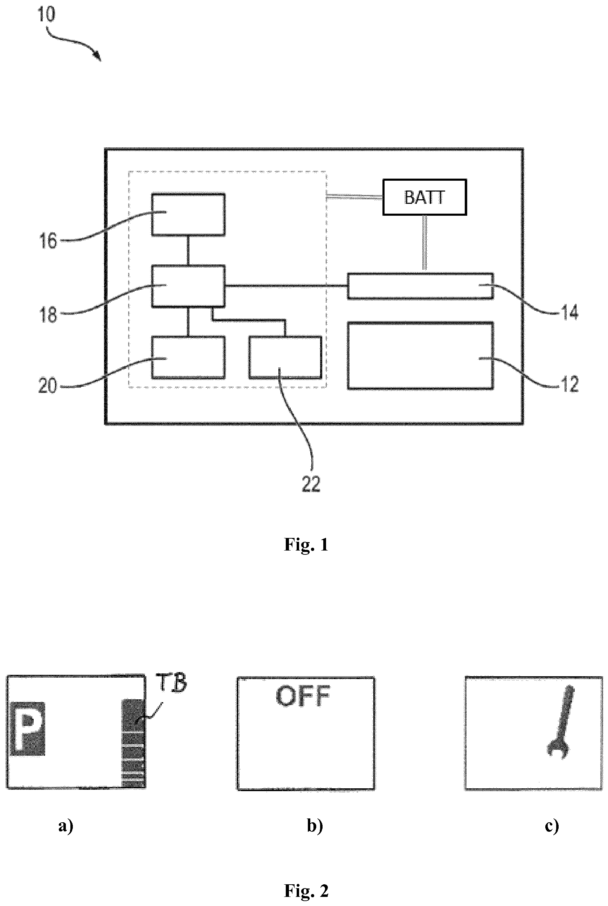

Die Figur 1 zeigt schematisch als Blockschaltbild den Aufbau eines erfindungsgemäßen Wertbehälters 10, der hier als Geldkassette ausgebildet ist. Die Geldkassette 10 umfasst einen Aufnahmebereich 12, in dem Wertgegenstände, insbesondere Banknoten und/oder Wertscheine, aufgenommen werden können, hier in Form von Banknoten- bzw. Wertscheinstapeln. Des Weiteren enthält die Geldkassette 10 eine Entwertungseinheit 14, die hier als Tinteneinfärbesystem (sogenanntes Tintenkit oder Ink-Kit) ausgebildet ist. Ein solches Tintenkit umfasst einen Farbstoffbehälter, in dem ein Farbstoff zum irreversiblen Einfärben der in dem Aufnahmebereich 12 aufgenommenen Wertscheine enthalten ist. Wird das Tintenkit 14 ausgelöst, so wird der Farbstoff über ein Sprühsystem auf die Wertscheine gesprüht. Dazu wird beim Auslösen die Sprengkapsel einer Gasdruckpatrone geöffnet, so dass das unter hohem Druck stehende Gas entweicht und den Farbstoff aus dem Farbstoffbehälter hinaus transportiert. Darüber hinaus umfasst die Geldkassette 10 eine oder mehrere Sensoreinheiten 16, mit deren Hilfe Manipulationsversuche der Geldkassette 10 detektiert werden können. Hierfür kann eine Vielzahl verschiedenartiger Sensoren zum Einsatz kommen, mit deren Hilfe unterschiedliche Zustands- und/oder Betriebsmerkmale der Geldkassette 10 zum Manipulationsschutz überwacht werden können. Beispielsweise können Flüssigkeitssensoren, Gassensoren, Lagesensoren, Sensoren zur Überwachung des Öffnens des Geldkassetten-Deckels und/oder eines -Shutters zum Einsatz kommen.
Außerdem enthält die Geldkassette 10 eine Steuereinheit bzw. Steuerungsschaltung 18, mit deren Hilfe die Geldkassette 10 und die darin verbauten elektrischen und/oder elektronischen Komponenten gesteuert werden. Die Geldkassette, insbesondere die darin verbauten elektrischen bzw. elektronischen Komponenten werden von einer Batterie BATT mit Strom versorgt, wobei vorzugsweise eine Lithium-Batterie zum Einsatz kommt.
Zu den von der Steuerungsschaltung 18 gesteuerten elektrischen Komponenten gehört auch die Entwertungseinheit bzw. das Tinkenkit 14, welches eine oder mehrere von der Steuerungsschaltung 18 durchgeführte Steuerungsprozeduren durchläuft. Insbesondere zählt dazu auch eine Prozedur, die Manipulationsversuche detektiert und ggf. das Auslösen des Tinkenkits 14 bewirkt. Darüber hinaus kann die Steuerungsschaltung 18, die insbesondere einen Mikrocontroller aufweist, erfasste Daten in einem Speicherelement 20 speichern, wie z.B. Daten bzw. Informationen über die von der Sensoreinheit 16 detektierten Manipulationsversuche. Darüber hinaus hat die Geldkassette 10 einen Bestandsspeicher 22, um Daten über den aktuellen Bestand an Wertscheinen zu speichern und zu protokollieren. Beide Speicher 20 und 22 können auch als logische Speicherbereiche in einem Hardware-Bauelement realisiert sein.
Mit Hilfe der Steuerungsschaltung 18 können u.a. verschiedene Betriebsmodi für die Geldkassette 10 voreingestellt werden, wobei in Abhängigkeit des jeweils aktuellen Prozessschrittes im Betrieb der Geldkassette 10 einer dieser Betriebsmodi eingestellt wird. Das Einstellen der jeweiligen Betriebsmodi erfolgt hierbei anhand von vorbestimmten Kriterien insbesondere automatisch durch die Steuerungsschaltung 18. Die Steuerung der Geldkassette bzw. ihrer elektrischen Komponenten (wie hier des Ink-Kits 14) erfolgt beispielsweise innerhalb von Steuerungsprozeduren, die verschiedene Betriebsmodi und damit einhergehende Betriebsstände aktivieren und deaktivieren. Ein solches Steuerungsverfahren ist an sich bekannt und wird z.B. in der EP 2 737 023 A1 offenbart, die sich mit der Überwachung und Detektion von Manipulationsversuchen an einer Geldkassette befasst und deren Inhalt hiermit durch Bezugnahme in die Offenbarung dieser Anmeldung eingeschlossen ist.
Des Weiteren wird auch der Inhalt der EP 2 463 831 A2, welche ein Verfahren zur Inbetriebnahme und zum Betreiben einer Geldkassette betrifft, hiermit durch Bezugnahme in die Offenbarung dieser Anmeldung eingeschlossen. Die in diesen Druckschriften offenbarten Prozeduren werden als Beispiele für bestehende Steuerungsprozeduren angesehen, die ebenfalls von der Steuerschaltung 18 der Erfindung durchgeführt werden können, um die Geldkassette in Betrieb zu nehmen sowie den Betrieb der eingebauten Komponenten durchzuführen und zu überwachen.

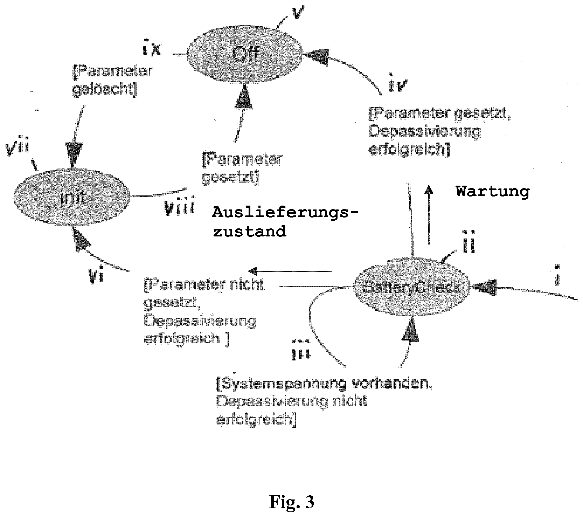

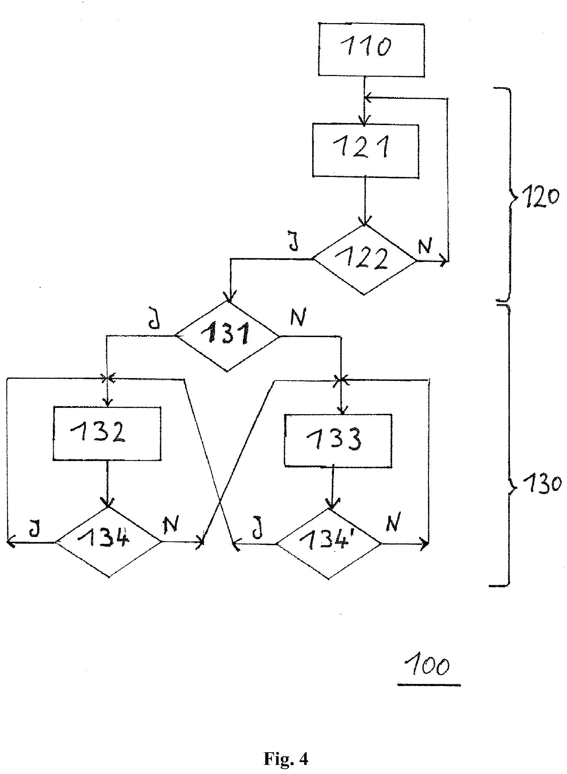

Anhand der Figuren 2a)-c) und der Figuren 3 und 4 wird hier nun ein erfindungsgemäßes Verfahren 100 näher beschrieben, das eine Einbindung einer Depassivierungsprozedur (Schrittfolge 120) in eine oder mehrere solcher bestehender Steuerungsprozeduren (Schrittfolge 130) bewirkt.

Zunächst wird das Verfahren 100 gestartet im Schritt 110, was im Wesentlichen bedeutet, dass eine neue Batterie eingesetzt wird oder die Geldkassette bei einer bereits eingesetzten Batterie nun zum Einsatz vorbereitet werden soll (s. auch Pfeil (i) in Fig. 3).

Im Schritt 121 erfolgt dann zunächst die eigentliche Prüfung der Batterie (s. auch in Fig. 3 Zustand (ii) "BatteryCheck"), wobei eine Depassivierung dann durchgeführt wird, wenn bestimmte Parameter dies anzeigen. Das kann z.B. die Lagerungsdauer der Batterie bzw. Ausschaltdauer sein; das kann auch ein Messparameter für die Klemmenspannung sein oder dergleichen. Während eine Depassivierung durchgeführt wird, kann dies auf einer Anzeige bzw. einem Display der Geldkassette angezeigt werden (s. Fig. 2a). Sollte zwar die Systemspannung vorhanden sein, die Depassivierung aber nicht erfolgreich gewesen sein (Pfeil (iii) in Fig. 3), so wird die Depassivierung ggf. wiederholt.
Wenn also eine Depassivierung durchgeführt wurde, wird im Schritt 122 (Fig. 2) geprüft, ob die Depassivierung erfolgreich war, d.h. ob die Batterie wirklich einsatzbereit ist. Das kann anhand von Klemmenspannungs-Messungen oder dergleichen geprüft werden. Sofern die Depassivierung erfolgreich war, kann das Verfahren in die eigentliche Steuerungsprozedur 130 übergehen. Dies wird auf einer Anzeige der Geldkassette angezeigt (s. Fig. 2b). Andernfalls wird nochmals eine Depassivierung durchgeführt, d.h. der Schritt 121 wird wiederholt. Sollte nach mehrmaligen Versuchen die Batterie weiterhin nicht einsatzbereit sein, so wird angezeigt, dass die Batterie auszutauschen ist (s. Fig. 2c).

Zur Fig. 3, die eine Zustandsmaschine bzw. eine State Machine wiedergibt, kann noch folgendes angefügt werden:
Erfindungsgemäß wird im Zustand (ii) "BatteryCheck" begonnen und dann wird abhängig vom Ergebnis der Zustand in der State Machine gewechselt. Als Vorbedingung wird z.B. eine Gelkassette mit geöffnetem Deckel angesehen.
Im negativen Fall (iii) verbleibt die Kassette im Zustand (ii) "BatteryCheck" und meldet an eine höhere Software-Schicht diesen Zustand. Zusätzlich wird im Display ein passendes Symbol, hier ein blinkender Schlüssel, angezeigt (siehe Fig. 2 c). Beim Aufruf des Funktionstests wird eine passierte Batterie gemeldet, zum Beispiel per Fehlercode "512". Eine Geldkassette, die in diesem Modus verbleibt, kann dann nicht für einen E2E-Prozess verwendet werden und kann somit nicht aktiv geschaltet werden. Somit wird vermieden, das eine Kassette mit schlechter Batterie für den Transport vorbereitet wird.

Im positiven Fall (iv) springt die Kassette in den Zustand (v), der einen Ausgangspunkt ("OFF") für weitere Standardprozeduren zum Betrieb der Kassette darstellt, also z.B. Inbetriebnahme des Tinteneinfärbesystems, Überwachung von Sensoren (Detektion Manipulation; Deckelüberwachung usw.) oder Schalten von Signalleuchten; Zustandsanzeigen usw.
Sofern es sich um eine neue Kassette handelt, die ab Werk ausgeliefert werden soll, wird nach erfolgreicher Depassivierung (pos. Fall vi) zum Zustand (vii) gewechselt, der einen Initialisierungszustand darstellt, d.h. die Bereitschaft, dass die Kassette ausgeliefert und dann vom Kunden initialisiert bzw. kundenspezifisch konfiguriert werden kann. Zwischen den Zuständen (v) und (vii) kann hin und her gewechselt werden (s. Pfeile viii und ix in Fig. 3). Die Zustände (vii) "init" und (v) "OFF" stellen Ausgangszustände dar, von denen ausgehend höhere Softwareschichten angesprochen werden können, um die Kassette in entsprechende Betriebsmodi zu setzen.
Wird die Geldkassette beispielsweise während einer Passivierung in ein System (z.B. Geldautomat) eingeschoben, so wird der Passivierungs-Vorgang (siehe 120 in Fig. 4) abgebrochen und die Geldkassette verbleibt zunächst in diesem Status, d.h. sie ist dann bis auf weiteres nicht verwendbar.
Somit veranschaulicht die Fig. 3 logische Verzweigungen ausgehend von einer Überprüfung und evtl. Depassivierung der Batterie ("BatteryCheck") entweder hin zu dem Zustand "init", der einen definierten Auslieferungszustand der Geldkassette betrifft (also Werkseinstellung bei Auslieferung) oder hin zu dem Zustand "Off", der sich auf einen definierten Wartungszustand der (bereits im Einsatzfeld befindlichen) Geldkassette bezieht. Hier bedeutet "Off", dass die Entwertungseinheit der Geldkassette abgeschaltet bzw. deaktiviert ist. Das bedeutet aber nicht, dass alle Komponenten der Geldkassette oder gar diese selbst abgeschaltet ist. Vielmehr befindet sich die Geldkassette im Zustand "Off" in einem einsatzbereiten Zustand (für den Transport), wobei allerdings die Entwertungseinheit (noch) nicht scharfgeschaltet ist. Die jeweiligen Zustände "init" oder "Off" können auch als Betriebsmodi verstanden werden, die durch eigene Steuerungsprozeduren angesteuert werden. Auch kann jeder Modus durch eine Unterprozedur einer übergeordneten Steuerungsprozedur verstanden werden. Die Pfeile mit der Bezeichnung "Parameter gesetzt" beziehen sich auf auf die jeweils für die Aktivierung des Modus erforderlichen Parameter. So bedeutet der Pfeil iv, dass nach erfolgreicher Depassivierung der Parameter zur Aktivierung des Modus "Off" gesetzt ist, so dass der Modus "init" nicht aktiviert wird (s. Pfeil vi).

Wie die-oben bereits anhand der beschriebenen Figuren 1-4 offenbart wird, bietet die Erfindung den Vorteil, dass der Wertbehälter sowohl bei seiner Auslieferung ab Werk wie auch später beim Einsatz im Feld immer nur dann in seinen (Erst-) Betrieb genommen wird, wenn mittels Prüfung und ggf. durchgeführter Depassivierung sichergestellt worden ist, dass die Batterie uneingeschränkt sofort einsatzbereit ist. Die Überprüfung und Depassivierung der Batterie wird vorteilhaft in bestehende Standardprozeduren eingebunden.
Was typische Standardprozeduren angeht, so sei hier noch erwähnt, dass der aktivierte Betriebsmodus und der überwachende Betriebsmodus insbesondere für den Transport der Geldkassette 10 (s. Fig. 1) in einem ungesicherten Umfeld verwendet werden können. Die Steuereinheit 18 stellt bei einem solchen ungesicherten Prozessschritt insbesondere automatisch entweder den aktivierten oder den überwachenden Betriebsmodus ein, je nachdem, wie hoch der Bestand an Wertscheinen ist. Hierzu ist bei der Steuereinheit 18 insbesondere ein Grenzwert voreingestellt, mit dem die Steuereinheit den aktuellen Bestand vergleicht. Ist der aktuelle Bestand größer oder gleich dem Grenzwert, so betreibt die Steuereinheit 18 die Geldkassette 10 in dem aktivierten Betriebsmodus, ist der aktuelle Bestand dagegen kleiner als der Grenzwert, so betreibt die Steuereinheit 18 die Geldkassette 10 in dem überwachenden Betriebsmodus.

Denn ein Auslösen der Entwertungseinheit 14 bei nur einem geringen Bestand der Geldkassette 10 an Wertscheinen wäre unrentabel, so dass es sinnvoller ist, die Wertscheine durch einen potentiellen Dieb eventuell entwenden zu lassen anstatt die Entwertungseinheit 14 auszulösen. Durch das Betreiben der Geldkassette in dem überwachenden Betriebsmodus in dem Fall eines solchen niedrigen Bestandes erfolgt aber dennoch ein Manipulationsschutz, in dem entsprechende Manipulationsversuche über die Sensoreinheit 16 detektiert und in dem Speicherelement 20 gespeichert werden. Somit können Manipulationsversuche zeitnah geahndet werden.

Die Daten, die von der Steuereinheit 18 in dem Speicherelement 20 gespeichert werden, sind insbesondere derart ausgebildet, dass aus ihnen entnommen werden kann, ob der jeweils protokollierte Manipulationsversuch in dem überwachenden Betriebsmodus oder dem aktivierten Betriebsmodus detektiert wurde. Somit kann über die gespeicherten Daten einfach festgestellt werden, ob die Entwertungseinheit 14 ausgelöst wurde oder ob eine "virtuelle Auslösung" erfolgte, d.h. dass die Entwertungseinheit 14 nicht tatsächlich ausgelöst wurde. Somit kann für den Fall, dass der Manipulationsversuch im überwachenden Betriebsmodus detektiert wurde und keine Auslösung der Entwertungseinheit 14 erfolgte, die Geldkassette 10 ggf. weiterverwendet werden, sofern sich herausstellt, dass keine tatsächliche Manipulation erfolgt ist bzw. diese nicht erfolgreich war und kein Schaden entstanden ist. Insbesondere können solche Fehleinträge bei nicht ausgelösten Entwertungseinheit 14 beim Einsetzen der Geldkassette 10 in eine Vorrichtung zur Handhabung von Wertscheinen wieder zurückgesetzt werden, so dass diese wieder planmäßig weiterbetrieben werden kann.
Die Geldkassette ist in einen sog. Cash-Cycle eingebunden. Unter einem Cash-Cycle versteht man mögliche Prozesse, die von der Geldkassette 10 in ihrem planmäßigen Betrieb durchlaufen werden können. Dazu gehören insbesondere mögliche Transportvorgänge der Geldkassette 10 zwischen einem Geldautomaten und einem Werttransportfahrzeug (nicht dargestellt). Bei dem hier beschriebenen Prozess erfolgt die Einstellung des jeweiligen Betriebsmodus durch die Steuereinheit 18 unabhängig von dem Bestand der Geldkassette 10 an Wertscheinen. Als Kriterium für die Einstellung des aktivierten Betriebsmodus oder des überwachenden Betriebsmodus wird von der Steuereinheit 18 hierbei die jeweilige Position der Geldkassette 10 innerhalb der Prozessschritte, also der Ort der Geldkassette 10, verwendet.
Wenn die Geldkassette 10 im Werttransportfahrzeug aufgenommen ist, befindet sie sich in einem relativ gesicherten Ort, da das Werttransportfahrzeug gepanzert ist. Es ist somit nicht notwendig, dass die Geldkassette 10 in dem aktivierten Betriebsmodus betrieben wird. Somit werden Fehlauslösungen der Entwertungseinheit 14, also unnötigen Auslösungen der Entwertungseinheit 14, vorgebeugt. Entsprechend stellt die Steuereinheit 18 der Geldkassette 10 den überwachenden Betriebsmodus ein, wenn die Geldkassette 10 im Werttransportfahrzeug angeordnet ist. Dies hat gegenüber dem deaktivierten Betriebsmodus den Vorteil, dass eventuelle Manipulationsversuche erkannt werden können und somit zeitnah geahndet werden können. Während der Aufnahme in dem Werttransportfahrzeug hat nur eine sehr begrenzte Anzahl von Personen, insbesondere die Fahrer des Werttransportfahrzeugs 58, Zugriff auf die Geldkassette 10. Wird somit während des Transportes in dem Werttransportfahrzeug ein Manipulationsversuch detektiert, kann dieser leicht diesen Personen zugeordnet und entsprechend geahndet werden.
Der Transport der Geldkassette 10 zwischen dem Werttransportfahrzeug und dem Geldautomaten erfolgt insbesondere mit Hilfe eines Koffers, in dem die Geldkassette 10 während des Transportes aufgenommen ist. Alternativ kann der Transport auch ungeschützt erfolgen. Für den Transport in dem Koffer wird die Geldkassette 10 noch im Werttransportfahrzeug aus einem dortigen Rack entnommen und in diesen Koffer eingesetzt. Anschließend wird der Koffer mit einem Werttransportfahrzeugschlüssel verriegelt. Die Steuereinheit 18 ist derart ausgebildet, dass sie bzw. entsprechende Sensoren erkennen können, mit welchem Schlüssel der Koffer ver- und entriegelt wird. Erfolgt das Verriegeln mit dem Werttransportfahrzeugschlüssel, so stellt die Steuereinheit 14 den aktivierten Betriebsmodus ein, da nun als nächstes der ungeschützte Transport in Richtung des Geldautomaten erfolgt.
Wird bei umgekehrter Transportrichtung die Geldkassette 10 dem Geldautoamten entnommen und über einen Geldautomatenschlüssel der Koffer verriegelt, so stellt die Steuereinheit 18 wiederum den aktivierten Betriebsmodus ein, da ein ungesicherter Transport erfolgt. Wird der Koffer im Werttransportfahrzeug dann durch den Werttransportfahrzeugschlüssel entriegelt, erkennt dies die Steuereinheit 18 und wechselt von dem aktivierten Betriebsmodus in den überwachenden Betriebsmodus, da durch die Entriegelung über den Werttransportfahrzeugschlüssel klar ist, dass nun ein gesicherter Transport im Werttransportfahrzeug erfolgt.
Die Geldkassette 10 umfasst vorzugsweise eine Anzeigeeinheit (s. auch Fig. 2), mit deren Hilfe der jeweilige Betriebsmodus angezeigt werden kann, in dem die Geldkassette sich aktuell betrieben ist, mit der aber auch die Zustände bzgl. der Einsatzbereitschaft der Batterie und einer automatisch durchgeführten Depassivierung für den Nutzer dargestellt wird. So wird z.B. die Einsatzbereitschaft, wie in Fig. 2c) dargestellt, durch ein Symbol "OFF" angezeigt, welches bedeutet, dass das Tintenkit zwar unscharf geschaltet ist, die Kassette aber vollständig und sofort einsatzbereit ist. Ausgehend davon kann zu verschiedenste Betriebsmodi gewechselt werden. So z.B. in einen speziellen Transportmodus, der sich dadurch auszeichnet, dass ein Timer aktiviert ist, d.h. dass für den Transport der Geldkassette ein vorbestimmtes Zeitintervall zur Verfügung steht, in dem der Transport abgeschlossen werden muss. Ist der Transport nicht abgeschlossen, bevor dieser Timer abgelaufen ist, so wird im aktivierten Betriebsmodus die Entwertungseinheit 14 tatsächlich und im überwachenden Betriebsmodus virtuell ausgelöst. "Virtuell ausgelöst" bedeutet, dass zwar alle Daten so gespeichert werden wie im aktivierten Betriebsmodus und dass alle anderen Verfahrensschritte der Steuereinheit 18 entsprechend abgearbeitet werden, dass aber kein tatsächliches Auslösen der Entwertungseinheit 14 erfolgt.
Somit kann über die zuvor beschriebene Display-Anzeige auf einfache Weise der jeweils aktuelle Betriebsmodus erkannt werden, so dass eine die Geldkassette 10 handhabende Person jeweils weiß, wie vorsichtig sie bei der Handhabung sein muss. Ebenso können über die Displayanzeige eventuelle Manipulationsversuche und Auslösungen der Entwertungseinheit 14 erkannt werden.

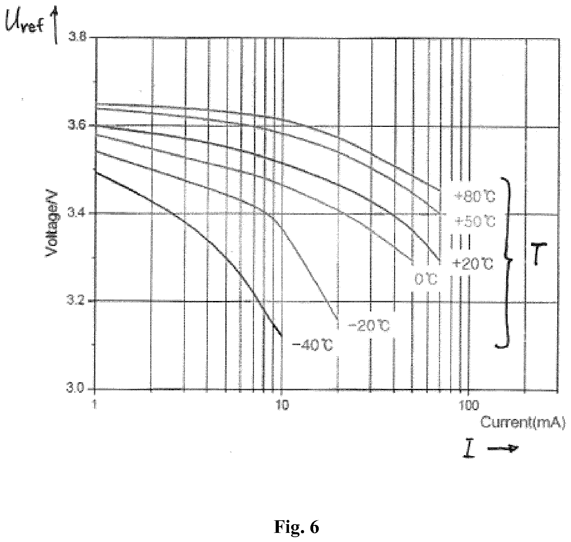

Was die Depassivierung der Batterie angeht (s. auch 120 in Fig. 4), so wird nachfolgend noch anhand der Fig. 5 und 6 der Ablauf eines Passivierung-Vorgangs (siehe Schrittfolge 21 in Figur vier) näher beschrieben:
Zur die Passivierung wird die Batterie mit einer definierten Last betrieben, d.h. die Batterie wird soweit belastet, wie es beispielsweise dem Strombedarf des Prozessors und der Hintergrundbeleuchtung der LCD-Anzeige entspricht. Dies können beispielsweise 20mA sein. Dementsprechend geht die Klemmenspannung U von einer Leerlaufspannung bei etwa 3,7 V in den ersten Sekunden (siehe Punkt A) deutlich herunter, d.h. sie sind auf beispielsweise 3V ab, steigt danach aber wieder an (Erholungsphase B), bis sie schließlich in die Sättigung kommt (Bereich C)

Ziel des Messvorganges ist es, festzustellen, ob die Klemmenspannung U nach einer relativ kurzen Erholungsphase ein Niveau erreicht, das ein vorgegebenen Referenzwert Uref von z.B. Beispiel 3,35V entspricht. Dies sollte innerhalb einer ausreichend kurzen Zeit der Fall sein, also beispielsweise nach 60 Sekunden. Sollte der Referenzwert Uref jedoch nicht erreicht werden, so ist von einem sehr schlechten Batteriezustand auszugehen, bei welchem selbst eine Depassivierung keine Besserung herbeiführen würde. Sollte die Klemmenspannung U innerhalb der ersten 60 Sekunden einen deutlichen Einbruch erleiden (welcher in der Regel durch Erwärmung der Batterie verursacht wird), dann wird die Messung sowie die Depassivierung abgebrochen.

Die Fig. 4 zeigt mehrere Verlaufskurven in Form einer Kurvenschar, welche tatsächlich gemessene Klemmenspannungsverläufe wiedergeben. Konkret wird innerhalb der ersten 5 Sekunden nach dem Zuschalten der Last zunächst nur die Batteriespannung bzw. Klemmenspannung U gemessen; es wird aber keine weitere Bewertung vorgenommen. Dabei wird stets die maximale Klemmenspannung gespeichert.
In den nachfolgenden etwa 55 Sekunden wird geprüft, ob die maximale Batteriespannung U den Referenzwert von z.B. 3,35V erreicht oder überschritten hat. Wenn jedoch die Batteriespannung irgendwann in dieser Zeit absinken sollte, wird von einem Einbruch der Klemmenspannung U ausgegangen und die die Passivierung wird abgeschaltet, weil dann keine weitere Erhöhung der Batteriespannung (Erholung) zu erwarten ist
Sollte jedoch die Klemmenspannung U bis zum Ende der Messerdauer von insgesamt 60 Sekunden angestiegen sein, so wird am Ende die maximal erreichte Spannung noch einmal gemessen bzw. bewertet und gegenüber dem Referenzwert Uref (minimale die Depassivierungsspannung) von 3,35V verglichen.

Anstelle eines fest vorgegebenen Referenzwertes Uref, kann dieser vorzugsweise auch in Abhängigkeit von der Umgebungstemperatur T geändert werden. Dies wird anhand der Fig. 6 veranschaulicht.
Demnach wird bei einer Raumtemperatur von etwa 20 °C und bei einem sehr geringen Belastungsstrom I der Referenzwert Uref bei etwa 3,6V liegen. Bei größerem Belastungsstrom von zum Beispiel 20 mA (siehe auch Figur 5) liegt der Referenzwert Uref niedriger; also wird je höher der Belastungsstrom I ist, ein geringerer Referenzwert Uref angesetzt. Bezüglich der Außentemperatur oder Umgebungstemperatur T wird der Referenzwert Uref bei steigender Temperatur angehoben. Der Referenzwert bzw. die Referenzspannung wird also abhängig von der Temperatur verschoben. Die Figur 6 zeigt mehrere Kurvenverläufe in Bereichen zwischen -40°C bis +80°C. Durch die Anpassung des Referenzwertes Uref bzw. der Bezugsspannung an die vorherrschende Temperatur wird eine bessere Messung und ebenso eine bessere Depassivierung herbeigeführt.

Insgesamt erzielt die Erfindung die Wirkung, dass bei solchen Batterien, welche durch Lagerung eine Passivierung erleiden, diese im Zusammenhang mit Standardprozeduren innerhalb eines Wertbehälters erforderlichenfalls depassiviert wird, so dass der Wertbehälter immer und ohne Einschränkungen sofort einsatzbereit ist. Somit kann der Wertbehälter sowohl im Servicefall wie auch in der Herstellung/Produktion vollständig in einen einsatzbereiten Zustand bzw. auslieferungsbereiten Zustand gebracht werden, wobei auf die bereits vorhandenen Hardware und Softwaremittel zurückgegriffen werden kann.
Die Depassivierung der Batterie kann beispielsweise auch in eine Überwachung einer Tinteneinfärbe-Elektronik und -Steuerung eingebunden werden. Durch die Erfindung kann der Wertbehälter, insbesondere transportable Wertbehälter seine Komponenten und den Batteriezustand selbst überwachen und kontrollieren und kann entsprechend dem Ergebnis für die elektronisch steuerbaren Komponenten den jeweils passenden Modus aktivieren (starten) oder deaktivieren (stoppen).

### Bezugszeichenliste

- 10: Wertbehälter, hier in Form einer Geldkassette
- 12: Aufnahmebereich für Wertscheine und dergleichen
- 14: Entwertungseinheit, enthaltend ein Tinteneinfärbevorrichtung
- 16: Sensoreinheit mit ein oder mehreren Sensoren
- 18: Steuereinheit
- 20: Speicherelement für Daten über Manipulationsversuche
- 22: Bestandsspeicher für Daten über Bestand an Wertscheinen

- BATT: Batterie, hier Lithium-Ionen-Batterie zur Stromversorgung

- 100: Verfahren
- 110, 120, 130: Schrittfolgen
- 121-123: Schritte der zweiten Schrittfolge 120
- 131-133: Schritte der dritten Schrittfolge 130

- TB: Anzeigeelement, hier für Klemmspannung und Fortschritt der Depassivierung (Timerbalken)

- U, Uref: Klemmenspannung bzw. Referenzwert
- T: Temperatur

- Off, init: Zustände (Betriebszustände) der Tinteneinfärbevorrichtung
- BatteryCheck: Zustand / Routine für Batterie-Prüfung und Depassivierung

## Patentansprüche

1. Verfahren (100) zur Depassivierung einer Batterie (BATT) eines Wertbehälters (10), der mindestens eine elektronisch steuerbare Komponente (14) und eine damit verbundene Steuerschaltung (18) aufweist, die von der Batterie (BATT) versorgt wird, wobei von der Steuerschaltung (18) mindestens eine Steuerungsprozedur für die mindestens eine elektronisch steuerbare Komponente (14) durchgeführt wird (130), wobei von der Steuerschaltung (18) die Depassivierung (120) der Batterie (BATT) im Zusammenhang mit einer Aktivierung oder Deaktivierung der mindestens einen Steuerungsprozedur (130) oder einer Unterprozedur davon durchgeführt wird,
**dadurch gekennzeichnet,**
**dass** der Wertbehälter ein transportabler Behälter für den Transport von Wertgegenständen ist, und dass die Depassivierung (120) der Batterie (BATT) vor der Aktivierung oder nach der Deaktivierung der Steuerungsprozedur (130) bzw. Unterprozedur durchgeführt wird.

2. Verfahren (100) nach Anspruch 1, **dadurch gekennzeichnet, dass** jeweils vor und/oder nach einer ersten Durchführung der mindestens einen Steuerungsprozedur (130) oder der einen Unterprozedur davon die Depassivierung (120) der Batterie (BATT) durchgeführt wird.

3. Verfahren (100) nach einem der vorhergehenden Ansprüche, **dadurch gekennzeichnet, dass** die Depassivierung (120) der Batterie (BATT) in Abhängigkeit von Betriebszuständen und/oder Betriebsmodi des Wertbehälters (10) durchgeführt wird, insbesondere in Abhängigkeit von Betriebszuständen und/oder Betriebsmodi, die durch die mindestens eine Steuerungsprozedur (130) oder Unterprozedur aktiviert und/oder deaktiviert werden.

4. Verfahren (100) nach einem der vorhergehenden Ansprüche, **dadurch gekennzeichnet, dass** mittels der mindestens einen Steuerungsprozedur (130) oder Unterprozedur in Abhängigkeit von veränderbaren Betriebsparametern mehrere Betriebsmodi (OFF, init) der mindestens einen elektronisch steuerbaren Komponente (14) aktiviert oder deaktiviert werden, und dass zumindest einer der Betriebsmodi nur bei einer erfolgreich durchgeführten Depassivierung (122; J) der Batterie (BATT) aktiviert oder deaktiviert wird.

5. Verfahren (100) nach Anspruch 4, **dadurch gekennzeichnet, dass** die Depassivierung der Batterie (BATT) vor einer jeden ersten Aktivierung oder Deaktivierung des zumindest einen der Betriebsmodi durchgeführt wird.

6. Verfahren (100) nach einem der vorhergehenden Ansprüche, **dadurch gekennzeichnet, dass** der Wertbehälter ein transportabler Wertbehälter (10) ist, wobei die mindestens eine elektronisch steuerbare Komponente eine Entwertungseinheit (14) für in dem Wertbehälter (10) transportierte Wertgegenstände, insbesondere für Banknoten und/oder Wertscheine, umfasst, und dass die Steuerungsprozedur (130) für einen Ereignis-gesteuerten Betrieb der Entwertungseinheit (14) durchgeführt wird, insbesondere für einen Betrieb, der eine Entwertung der Wertgegenstände umfasst, die bei einem an dem Wertbehälter auftretendem Manipulations-Ereignis durchgeführt wird.

7. Verfahren (100) nach einem der vorhergehenden Ansprüche, **dadurch gekennzeichnet, dass** das Verfahren einen oder mehrere der folgenden Schritte umfasst:
Depassivierung der Batterie (BATT) durch Zuschalten einer Last und Messen der absinkenden und dann wieder ansteigenden Klemmenspannung (121);
Prüfen, ob die Klemmspannung (U) einen vorgebbaren Referenzwert (Uref) überschreitet oder nicht (122);
Wenn die Klemmspannung (U) den vorgebbaren Referenzwert (Uref) überschreitet, wird die Depassivierung als erfolgreich beendet (122; J) und mit der Durchführung der Steuerungsprozedur(130) begonnen (131); andernfalls wird die Depassivierung weiter durchgeführt (121);
Prüfen, ob für den Eintritt in einen ersten Betriebszustand (OFF) ein Betriebsparameter gesetzt ist oder nicht (131);
Wenn der Betriebsparameter gesetzt ist, wird durch Eintritt in den ersten Betriebszustand (OFF) ein erster Betriebsmodus aktiviert (132);
Wenn der Betriebsparameter nicht gesetzt ist, wird durch Eintritt in einen zweiten Betriebszustand (init) ein zweiter Betriebsmodus aktiviert (133);
Prüfen in dem ersten Betriebszustand (OFF), ob der Betriebsparameter noch gesetzt ist oder nicht mehr (134);
Wenn der Betriebsparameter noch gesetzt ist, wird der erste Betriebszustand (OFF) beibehalten und der erste Betriebsmodus bleibt aktiviert (132, 134); andernfalls wird in den zweiten Betriebszustand (init) gewechselt (133);
Prüfen in dem zweiten Betriebszustand (init), ob der Betriebsparameter weiterhin nicht gesetzt ist oder nun gesetzt wird (134');
Wenn der Betriebsparameter weiterhin nicht gesetzt ist, wird der zweite Betriebszustand (init) beibehalten und der zweite Betriebsmodus bleibt aktiviert (133, 134'); andernfalls wird in den ersten Betriebszustand (OFF) gewechselt (132).

8. Verfahren (100) nach Anspruch 7, **dadurch gekennzeichnet, dass** in dem Schritt (122) für das Prüfen der Klemmspannung (U) diese für eine vorgebare Zeitdauer überwacht wird, um den zeitlichen Verlauf der Klemmspannung (U) im Vergleich mit dem Referenzwert (Uref) zu erfassen, und dass abhängig davon über das Beenden oder Fortführen der Depassivierung der Batterie (BAT) entschieden wird.

9. Verfahren (100) nach Anspruch 8, **dadurch gekennzeichnet, dass** in dem Schritt (122) für das Prüfen der Klemmspannung (U) der Referenzwert (Uref) in Abhängigkeit einer Umgebungstemperatur (T) vorgegeben wird, insbesondere dass bei Erhöhung der Umgebungstemperatur (T) der Referenzwert (Uref) erhöht wird.

10. Verfahren (100) nach einem der Ansprüche 1-9, **dadurch gekennzeichnet, dass** die mehreren Betriebsmodi verschiedene Betriebszustände, insbesondere einen Ausgangs-Zustand (OFF) für die Inbetriebnahme des Wertbehälters (10) und einen Initialisierung-Zustand (init) für die werksseitige Auslieferung des Wertbehälters (10) umfassen.

11. Verfahren (100) nach einem der Ansprüche 1-10, **dadurch gekennzeichnet, dass** der Betriebsmodus des jeweils aktivierten Betriebszustandes auf einem Anzeigedisplay (DSP) des Wertbehälters (10) angezeigt wird, und dass auch ein Depassivierungsmodus (P) angezeigt wird, wenn die Depassivierung der Batterie (BAT) durchgeführt wird (120).

12. Verfahren (100) nach einem der Ansprüche 1-11, **dadurch gekennzeichnet, dass** auf einem bzw. dem Anzeigedisplay (DSP) des Wertbehälters (10) ein Anzeige-Element (TB) für die Höhe der gemessenen Klemmenspannung (U) angezeigt wird.

13. Wertbehälter, mit mindestens einer elektronisch steuerbaren Komponente (14), einer damit verbundene Steuerschaltung (18) und einer Batterie (BATT), wobei die Steuerschaltung (18) beschaffen ist, eine oder mehrere Steuerungsprozeduren für die mindestens eine elektronisch steuerbare Komponente (14) durchzuführen, **dadurch gekennzeichnet,**
**dass** der Wertbehälter ein transportabler Behälter für den Transport von Wertgegenständen ist, und dass die Steuerschaltung (18) beschaffen ist, das Verfahren zur Depassivierung der Batterie (BATT) gemäß einem der vorhergehenden Verfahrensansprüchen durchzuführen.

14. Wertbehälter (10) nach Anspruch 13, **dadurch gekennzeichnet, dass** Wertbehälters (10) zumindest eines der folgenden Merkmale aufweist:
die Batterie (BATT) ist eine Lithium-Batterie;
die Steuerschaltung (18) weist einen Mikro-Controller auf;
die mindestens eine elektronisch steuerbare Komponente umfasst eine Entwertungseinheit (14), insbesondere ein Tinteneinfärbesystem, für in dem Wertbehälter (10) transportierte Wertgegenstände, insbesondere für Banknoten und/oder Wertscheine;
der Wertbehälter (10) weist ein Anzeigedisplay (DSP) zur Anzeige von Betriebsmodi der jeweils aktivierten Betriebszustände und/oder zur Anzeige eines Depassivierungsmodus (P) und/oder eines Anzeige-Elementes (TB) für die Höhe der gemessenen Klemmenspannung (U) der Batterie (BATT) auf.

## Claims

1. Method (100) for depassivation of a battery (BATT) of a valuable item container (10) that comprises at least one electronically controllable component (14) and an associated control circuit (18) which is supplied by the battery (BATT), wherein at least one control procedure for the at least one electronically controllable component (14) is executed by the control circuit (18) (130), wherein the depassivation (120) of the battery (BATT) in connection with an activation or deactivation of the at least one control procedure (130) or a sub-procedure thereof is executed by the control circuit (18),
**characterized in that** the valuable item container is a transportable container for transporting valuable items, and **in that** the depassivation (120) of the battery (BATT) is executed before the activation or after the deactivation of the control procedure (130) or sub-procedure.

2. Method (100) according to Claim 1, **characterized in that** the depassivation (120) of the battery (BATT) is executed respectively before and/or after a first execution of the at least one control procedure (130) or of the one sub-procedure thereof.

3. Method (100) according to one of the preceding claims, **characterized in that** the depassivation (120) of the battery (BATT) is executed in dependence on operating states and/or operating modes of the valuable item container (10), in particular in dependence on operating states and/or operating modes that are activated and/or deactivated by the at least one control procedure (130) or sub-procedure.

4. Method (100) according to one of the preceding claims, **characterized in that** multiple operating modes (OFF, init) of the at least one electronically controllable component (14) are activated or deactivated by means of the at least one control procedure (130) or sub-procedure, in dependence on variable operating parameters, and **in that** at least one of the operating modes is only activated or deactivated when the depassivation (122; J) of the battery (BATT) has been successfully executed.

5. Method (100) according to Claim 4, **characterized in that** the depassivation of the battery (BATT) is executed before each first activation or deactivation of the at least one of the operating modes.

6. Method (100) according to one of the preceding claims, **characterized in that** the valuable item container is a transportable valuable item container (10), wherein the at least one electronically controllable component comprises an invalidation unit (14) for valuable items transported in the valuable item container (10), in particular for banknotes and/or vouchers, and **in that** the control procedure (130) is executed for event-controlled operation of the invalidation unit (14), in particular for operation comprising an invalidation of the valuable items, which is executed if a manipulation event occurs on the valuable item container.

7. Method (100) according to one of the preceding claims, **characterized in that** the method comprises one or more of the following steps:
depassivating the battery (BATT) by connecting a load and measuring the falling and then again rising terminal voltage (121);
checking whether the terminal voltage (U) exceeds a presettable reference value (Uref) or not (122);
if the terminal voltage (U) exceeds the presettable reference value (Uref), the depassivation is completed as successful (122; J) and the control procedure (130) is begun (131); otherwise the depassivation is continued (121);
checking whether an operating parameter for entering a first operating state (OFF) is set or not (131);
if the operating parameter is set, a first operating mode is activated by entering the first operating state (OFF) (132);
if the operating parameter is not set, a second operating mode is activated by entering a second operating state (init) (133);
checking in the first operating state (OFF) whether the operating parameter is still set or not any longer (134);
if the operating parameter is still set, the first operating state (OFF) is maintained and the first operating mode remains activated (132, 134); otherwise, it is switched over to the second operating state (init) (133);
checking in the second operating state (init) whether the operating parameter is still not set or is now being set (134');
if the operating parameter is still not set, the second operating state (init) is maintained and the second operating mode remains activated (133, 134'); otherwise, it is switched over to the first operating state (OFF) (132).

8. Method (100) according to Claim 7, **characterized in that**, in the step (122) for checking the terminal voltage (U), it is monitored for a presettable period of time to obtain the variation over time of the terminal voltage (U) in comparison with the reference value (Uref), and **in that**, depending on that, it is decided whether to end or continue with the depassivation of the battery (BAT).

9. Method (100) according to Claim 8, **characterized in that**, in the step (122) for checking the terminal voltage (U), the reference value (Uref) is preset in dependence on an ambient temperature (T), in particular **in that** the reference value (Uref) is increased when the ambient temperature (T) rises.

10. Method (100) according to one of Claims 1-9, **characterized in that** the multiple operating modes comprise various operating states, in particular an initial state (OFF) for starting the operation of the valuable item container (10) and an initialization state (init) for the factory delivery of the valuable item container (10).

11. Method (100) according to one of Claims 1-10, **characterized in that** the operating mode of the respectively activated operating state is indicated on an indicating display (DSP) of the valuable item container (10), and **in that** a depassivation mode (P) is also indicated when the depassivation of the battery (BAT) is being executed (120).

12. Method (100) according to one of Claims 1-11, **characterized in that** an indicating element (TB) for the level of the measured terminal voltage (U) is indicated on a or the indicating display (DSP) of the valuable item container (10).

13. Valuable item container with at least one electronically controllable component (14), an associated control circuit (18) and a battery (BATT), wherein the control circuit (18) is configured to execute one or more control procedures for the at least one electronically controllable component (14),
**characterized**
**in that** the valuable item container is a transportable container for transporting valuable items, and in that the control circuit (18) is configured to execute the method for depassivating the battery (BATT) according to one of the preceding method claims.

14. Valuable item container (10) according to Claim 13, **characterized in that** the valuable item container (10) comprises at least one of the following features:
the battery (BATT) is a lithium battery;
the control circuit (18) comprises a microcontroller;
the at least one electronically controllable component comprises an invalidation unit (14), in particular an ink dyeing system, for valuable items being transported in the valuable item container (10), in particular for banknotes and/or vouchers;
the valuable item container (10) comprises an indicating display (DSP) for indicating operating modes of respectively activated operating states and/or for indicating a depassivation mode (P) and/or an indicating element (TB) for the level of the measured terminal voltage (U) of the battery (BATT).

## Revendications

1. Procédé (100) de dépassivation d'une batterie (BATT) d'un coffre pour objets de valeur (10) comportant au moins un composant à commande électronique (14) et un circuit de commande (18) connecté à celui-ci et est alimenté par la batterie (BATT), dans lequel au moins une procédure de commande destinée audit au moins un composant à commande électronique (14) est effectuée (130) par le circuit de commande (18), dans lequel la dépassivation (120) de la batterie (BATT) est effectuée par le circuit de commande (18) en association avec une activation ou une désactivation de ladite au moins une procédure de commande (130) ou d'une sous-procédure de celle-ci, **caractérisé en ce que** le coffre pour objets de valeur est un coffre transportable destiné à transporter des objets de valeur, et **en ce que** la dépassivation (120) de la batterie (BATT) est effectuée avant l'activation ou après la désactivation de la procédure de commande (130) ou de la sous-procédure.

2. Procédé (100) selon la revendication 1, **caractérisé en ce que** la dépassivation (120) de la batterie (BATT) est effectuée avant et/ou après une première exécution de ladite au moins une procédure de commande (130) ou de ladite sous-procédure.

3. Procédé (100) selon l'une des revendications précédentes, **caractérisé en ce que** la dépassivation (120) de la batterie (BATT) est effectuée en fonction d'états de fonctionnement et/ou de modes de fonctionnement du coffre pour objets de valeur (10), en particulier en fonction d'états de fonctionnement et/ou de modes de fonctionnement qui sont activés et/ou désactivés par ladite au moins une procédure de commande (130) ou sous-procédure.

4. Procédé (100) selon l'une des revendications précédentes, **caractérisé en ce que** plusieurs modes de fonctionnement (OFF, init) dudit au moins un composant à commande électronique (14) sont activés ou désactivés au moyen de ladite au moins une procédure de commande (130) ou sous-procédure en fonction de paramètres de fonctionnement modifiables, et **en ce qu'**au moins l'un des modes de fonctionnement n'est activé ou désactivé que si la dépassivation (122 ; J) de la batterie (BATT) réussit.

5. Procédé (100) selon la revendication 4, **caractérisé en ce que** la dépassivation de la batterie (BATT) est effectuée avant chaque première activation ou désactivation de l'au moins un des modes de fonctionnement.

6. Procédé (100) selon l'une des revendications précédentes, **caractérisé en ce que** le coffre pour objets de valeur est un coffre pour objets de valeur transportable (10), dans lequel ledit au moins un composant à commande électronique comprend une unité d'invalidation (14) destinée aux objets de valeur transportés dans le coffre pour objets de valeur (10), en particulier pour des billets de banque et/ou des documents de valeur, et **en ce que** la procédure de commande (130) est effectuée pour une opération commandée par événement de l'unité d'invalidation (14), en particulier pour une opération qui comprend une invalidation des objets de valeur qui est effectuée pendant une manipulation survenue sur les objets de valeur.

7. Procédé (100) selon l'une des revendications précédentes, **caractérisé en ce que** le procédé comprend une ou plusieurs des étapes suivantes :
dépassiver la batterie (BATT) par activation d'une charge et mesure de la tension de borne décroissante puis croissante (121) ;
vérifier si la tension de borne (U) dépasse une valeur de référence prédéfinie (Uref) ou non (122) ;
si la tension de borne (U) dépasse la valeur de référence spécifiée (Uref), la dépassivation est interrompue comme étant réussie (122 ; J) et est lancée (131) au moyen de l'exécution de la procédure de commande (130) ;
sinon la dépassivation se poursuit (121) ;
vérifier si un paramètre de fonctionnement est réglé pour un passage dans un premier état de fonctionnement (OFF) ou non (131) ;
si le paramètre de fonctionnement est réglé, un premier mode de fonctionnement est activé (132) par passage dans le premier état de fonctionnement (OFF) ;
si le paramètre de fonctionnement n'est pas réglé un deuxième mode de fonctionnement (133) est activé par passage dans un deuxième état de fonctionnement (init) ;
dans le premier état de fonctionnement (OFF), vérifier si le paramètre de fonctionnement est encore réglé ou non (134) ;
si le paramètre de fonctionnement est encore réglé, le premier état de fonctionnement (OFF) est maintenu et le premier mode de fonctionnement reste activé (132, 134) ; sinon un passage (133) est effectué dans le deuxième état de fonctionnement (init) ;
dans le deuxième état de fonctionnement (init), vérifier si le paramètre de fonctionnement n'est toujours pas réglé ou s'il est maintenant réglé (134') ;
si le paramètre de fonctionnement n'est toujours pas réglé, le deuxième état de fonctionnement (init) est maintenu et le deuxième mode de fonctionnement reste activé (133, 134') ; sinon, un passage (132) est effectué dans le premier état de fonctionnement (OFF).

8. Procédé (100) selon la revendication 7, **caractérisé en ce que**, lors de l'étape (122) de vérification de la tension de borne (U), celle-ci est surveillée pendant une période de temps prédéfinie afin de détecter l'évolution temporelle de la tension de borne (U) par comparaison à la valeur de référence (Uref), et **en ce qu'**une décision est prise de terminer ou de poursuivre la dépassivation de la batterie (BAT) en fonction de celle-ci.

9. Procédé (100) selon la revendication 8, **caractérisé en ce que**, lors de l'étape (122) de vérification de la tension de borne (U), la valeur de référence (Uref) est prédéterminée en fonction d'une température ambiante (T), en particulier **en ce que** la valeur de référence (Uref) est augmentée lorsque la température ambiante (T) augmente.

10. Procédé (100) selon l'une des revendications 1-9, **caractérisé en ce que** les différents modes de fonctionnement comprennent différents états de fonctionnement, en particulier un état initial (OFF) destiné à la mise en fonctionnement du coffre pour objets de valeur (10) et un état d'initialisation (init) destiné à la livraison en usine du coffre pour objets de valeur (10).

11. Procédé (100) selon l'une des revendications 1-10, **caractérisé en ce que** le mode de fonctionnement de l'état de fonctionnement respectivement activé est indiqué sur un afficheur (DSP) du coffre pour objets de valeur (10), et **en ce qu'**un mode de dépassivation (P) est également indiqué lorsque la dépassivation de la batterie (BAT) est effectuée (120).

12. Procédé (100) selon l'une des revendications 1-11, **caractérisé en ce qu'**un élément d'affichage (TB) de le niveau de la tension de borne mesurée (U) est affiché sur un afficheur ou sur l'afficheur (DSP) du coffre pour objets de valeur (10).

13. Coffre pour objets de valeur comprenant au moins un composant à commande électronique (14), un circuit de commande (18) relié à celui-ci et une batterie (BATT), dans lequel le circuit de commande (18) est conçu pour mettre en oeuvre une ou plusieurs procédures de commande dudit au moins un composant à commande électronique (14),
**caractérisé en ce que** le coffre pour objets de valeur est un coffre transportable destiné à transporter des objets de valeur et **en ce que** le circuit de commande (18) est conçu pour mettre en oeuvre le procédé de dépassivation de la batterie (BATT) selon l'une des revendications de procédé précédentes.

14. Coffre pour objets de valeur (10) selon la revendication 13, **caractérisé en ce que** le coffre pour objets de valeur (10) présente au moins l'une des caractéristiques suivantes :
la batterie (BATT) est une batterie au lithium ;
le circuit de commande (18) comporte un microcontrôleur ;
ledit au moins un composant à commande électronique comprend une unité d'invalidation (14), en particulier un système d'encrage, destiné à des objets de valeur transportés dans le coffre pour objets de valeurs (10), en particulier destiné à des billets de banque et/ou des documents de valeur ;
le coffre pour objets de valeur (10) comporte un afficheur (DSP) destiné à indiquer les modes de fonctionnement des états de fonctionnement respectivement activés et/ou à indiquer un mode de dépassivation (P) et/ou un élément d'affichage (IB) du niveau de la tension de borne mesurée (U) de la batterie (BATT).
